(19) Europäisches Patentamt
European Patent Office
Office européen des brevets

(11) **EP 2 413 511 B1**

(12) **FASCICULE DE BREVET EUROPEEN**

(45) Date de publication et mention
de la délivrance du brevet:
**05.12.2012 Bulletin 2012/49**

(51) Int Cl.:
*H04B 1/707* (2011.01)    *H04J 11/00* (2006.01)
*H04W 52/24* (2009.01)    *H04B 1/7103* (2011.01)

(21) Numéro de dépôt: **11173772.2**

(22) Date de dépôt: **13.07.2011**

(54) **Méthode de communication supervisée par une classification d'interférence**

Kommunikationsmethode, die durch eine Interferenzklassifikation überwacht wird

Communication method supervised by interference classification

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **26.07.2010 FR 1056115**

(43) Date de publication de la demande:
**01.02.2012 Bulletin 2012/05**

(73) Titulaire: **Commissariat à l'Énergie Atomique
et aux Énergies Alternatives
75015 Paris (FR)**

(72) Inventeurs:
• **Abgrall, Cédric**
**38100 Grenoble (FR)**
• **Calvanese Strinati, Emilio**
**38000 Grenoble (FR)**

(74) Mandataire: **Augarde, Eric et al
Brevalex
56, boulevard de l'Embouchure, Bât. B
B.P. 27519
F-31075 Toulouse Cedex 2 (FR)**

(56) Documents cités:
• **RAUL H ETKIN ET AL: "Gaussian Interference
Channel Capacity to Within One Bit: the General
Case", IEEE INTERNATIONAL SYMPOSIUM ON
INFORMATION THEORY. ISIT 2007., 24 juin 2007
(2007-06-24), pages 2181-2185, XP031282400,
IEEE, PISCATAWAY, NJ, USA ISBN:
978-1-4244-1397-3**
• **JAFAR S A ET AL: "Generalized Degrees of
Freedom of the Symmetric Gaussian K User
Interference Channel", IEEE TRANSACTIONS ON
INFORMATION THEORY IEEE USA, vol. 56, no. 7,
16 juin 2010 (2010-06-16), pages 3297-3303,
XP002626019, ISSN: 0018-9448, DOI: 10.1109/TIT.
2010.2048494**

**Description**

**DOMAINE TECHNIQUE**

La présente invention concerne de manière générale le domaine des systèmes des télécommunications sans fil et plus particulièrement la réduction des effets de l'interférence intra-bande et inter-cellulaire dans des systèmes de télécommunication cellulaire.

**ÉTAT DE LA TECHNIQUE ANTÉRIEURE**

Un des problèmes affectant une communication au sein d'un système de télécommunication cellulaire est celui de l'interférence générée par les autres communications de la cellule ou des cellules voisines. On distingue classiquement l'interférence inter-cellulaire due aux communications des cellules voisines et l'interférence intra-cellulaire due aux communications de la même cellule où se trouve le terminal.

De nombreuses techniques ont été proposées et mises en oeuvre pour réduire l'interférence intra-cellulaire. La plupart de ces techniques reposent sur une allocation de ressources de transmission orthogonales, par exemple d'intervalles de temps de transmission (TDMA), de fréquences de transmission (FDMA), d' intervalles de sous-porteuses d'un multiplex OFDM (OFDMA), de codes de transmission (CDMA), de faisceaux de transmission (SDMA), voire d'une combinaison de telles ressources, de manière à séparer les différentes communications d'une même cellule.

Les ressources de transmission étant rares, celles-ci sont généralement réutilisées, au moins partiellement, d'une cellule à l'autre. Un module de gestion des ressources de transmission ou RRM *(Radio Resource Management)* est alors en charge d'allouer de manière statique ou dynamique les ressources de transmission aux différentes cellules. Il est notamment connu de réutiliser de manière statique des fréquences de transmission selon un schéma bi-dimensionnel *(Frequency Reuse Pattern)*.

Du fait de la réutilisation des ressources de transmission, une première communication entre un premier terminal et une première station de base d'une cellule peut être interférée par une seconde communication, utilisant la même ressource de transmission, entre un second terminal et une seconde station de base d'une cellule voisine. La situation est encore davantage critique lorsque les cellules sont adjacentes et les terminaux sont en bordure de cellule. Dans ce cas, les terminaux doivent émettre à pleine puissance et le niveau d'interférence est alors élevé.

Pour une communication donnée, dite ici première communication, on appelle communément interférence intra-bande l'interférence induite par une seconde communication utilisant la même ressource de transmission que la première. Par opposition, on appelle interférence inter-bande celle induite par une seconde communication utilisant une ressource de transmission distincte (par exemple une fréquence de transmission voisine ou un autre intervalle de transmission) de celle utilisée par la première.

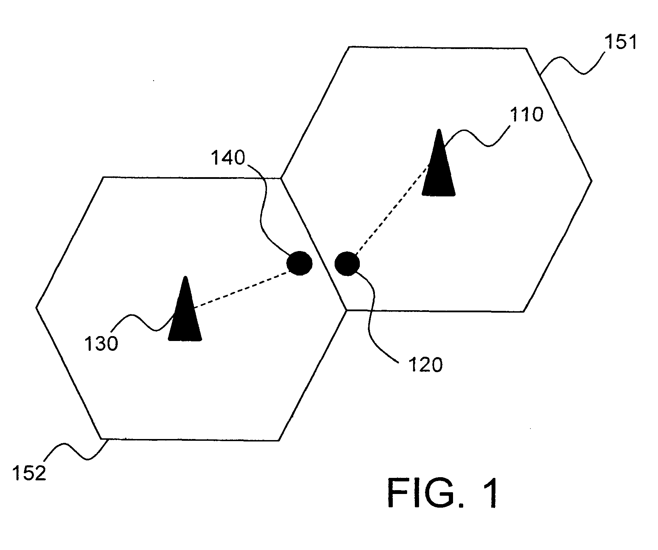

La Fig. 1 représente un système de télécommunication cellulaire très simplifié, comprenant deux cellules 151 et 152. La première cellule 151 contient un premier couple de terminaux constitué d'un premier terminal émetteur 110 et d'un premier terminal récepteur 120. De manière similaire, la seconde cellule 152 comprend un second couple de terminaux constitué d'un second terminal émetteur 130 et d'un second terminal récepteur 140. Par terminal, on entend ici un terminal mobile ou une station de base, voire un terminal relais dans le cas d'un canal relayé. En particulier, on comprendra que l'on considère ici aussi bien les communications sur voie montante *(uplink)* que sur voie descendante *(downlink)*. On suppose en outre que la première communication entre les terminaux 110 et 120, utilise la ou les même (s) ressource(s) de transmission que la seconde transmission entre les terminaux 130 et 140 de sorte que les deux communications interfèrent entre elles.

L'article de R.H. Etkin et al. intitulé « Gaussian interference channel capacity to within one bit: the general case » publié dans Proc. ISIT 2007, pages 2181-2185 décrit un modèle d'interférence entre deux couples de terminaux dans l'hypothèse de canaux gaussiens.

L'article de S.A. Jafar intitulé « Generalized degrees of freedom of the symmetric gaussian K user interference channel » publié dans IEEE Trans. on Inf. Theory, Vol. 56, N° 7, Juillet 2010, pages 3297-3303 décrit différents régimes d'interférence dans l' hypothèse d'un canal interférent gaussien à deux utilisateurs.

Le traitement et la réduction de l'interférence inter-cellulaire ont fait l'objet de très nombreuses recherches.

La méthode de traitement la plus simple est de considérer l'interférence comme un simple bruit thermique. Cette méthode de traitement n'est toutefois acceptable que si le niveau d'interférence est faible. Il est à noter que la plupart des algorithmes d'allocation de puissance *(power allocation)* sont basés sur cette hypothèse.

D'autres méthodes de traitement permettent de réduire l'interférence en estimant le signal d'information de la (ou des) communication(s) interférente(s). Cela suppose que le terminal récepteur considéré sache décoder ces signaux d'information et connaisse par conséquent les codes ayant servi à les coder. Parmi ces méthodes, on connaît notamment les schémas de réduction d'interférence de type parallèle ou PIC *(Parallel Inferference Canceller)* ou série *(Successive Interference Canceller)*, bien connus de l'homme du métier.

Une autre approche classique pour réduire le niveau d'interférence est de mettre en oeuvre une méthode adaptative d'allocation de puissance (adaptive *power control).* Une telle méthode permet de contrôler les niveaux de puissance des différents terminaux émetteurs de manière à garantir une qualité de service prédéterminée aux différents utilisateurs. Cette qualité de service peut être mesurée selon le cas en termes de débit, de temps de latence, de taux d'erreur paquet, de couverture spatiale, etc. On appelle conventionnellement métrique de qualité de service, le ou les paramètre(s) utilisé(s) pour la mesurer. En règle générale, une communication d'un utilisateur requiert une qualité de service minimale qui est prise en compte ou négociée lors de la procédure d'admission de l'utilisateur dans la cellule. Cette qualité de service minimale s'exprime sous la forme d'une contrainte sur la métrique de qualité de service : latence inférieure à un seuil, débit supérieur à un minimum garanti, etc. L'allocation de puissance est alors effectuée de manière à respecter la contrainte sur la métrique de qualité de service.

Enfin, l'allocation de puissance peut être prise en charge de manière centralisée *(Centralized Power Allocation)* par un noeud spécifique du réseau, NC *(Network Controller)* ou bien de manière distribuée *(Distributed Power Allocation)* au sein de chaque terminal.

Réciproquement, pour une contrainte de puissance d'émission donnée, on peut rechercher à maximiser les débits des différents utilisateurs, à augmenter la couverture spatiale des différents terminaux, à réduire les temps de latence pour les différentes communications, autrement dit à améliorer la qualité de service des différents utilisateurs. Dans ce contexte, on exprime la qualité de service sous la forme d'une fonction dite fonction d'utilité *(utility function)* relative à un ou plusieurs utilisateurs. Par exemple, cette fonction d'utilité peut être la somme des débits de différentes communications *(Sum-Rate)* ou bien le débit minimum *(Min-Rate)* sur ces communications.

Les méthodes connues de traitement de l'interférence inter-cellulaire intra-bande sont relativement peu flexibles au sens où elles ne s'adaptent pas aux niveaux d'interférence affectant les différentes communications.

Un premier problème à la base de l'invention est par conséquent de proposer une méthode de communication pour système de télécommunication sans fil, dans laquelle le traitement de l'interférence est adaptatif en fonction du niveau de l'interférence.

Un autre problème à la base de l'invention est de prévoir une méthode d'allocation de puissance ou de maximisation d'une fonction d'utilité qui prenne en compte ce traitement adaptatif de l'interférence.

**EXPOSÉ DE L'INVENTION**

La présente invention est définie par une méthode de communication pour système de télécommunication cellulaire comprenant au moins un premier couple de terminaux constitué d'un premier terminal émetteur et d'un premier terminal récepteur et d'un second couple de terminaux constitué d'un second terminal émetteur et d'un second terminal récepteur, une première communication entre les terminaux du premier couple utilisant les mêmes ressources de transmission qu'une seconde communication entre les terminaux du second couple, de sorte que les deux communications interfèrent entre elles. Selon cette méthode :

- on estime les coefficients de canal entre lesdits terminaux émetteur et lesdits terminaux récepteur ;
- on en déduit un diagramme d'interférence pour au moins le premier terminal récepteur, le diagramme étant obtenu pour une première plage de puissance d'émission du premier terminal émetteur et une seconde plage de puissance d'émission du second terminal, et pour au moins un couple de débits des première et seconde communications ;
- on détermine, pour le couple de débits considéré, une partition du diagramme en différentes zones, chaque zone correspondant à un type distinct de traitement de l'interférence pour au moins la première communication ;
- on sélectionne une zone de la partition contenant un point de fonctionnement des premier et second terminaux récepteur ;
- on effectue au moins dans le premier terminal récepteur le traitement de l'interférence correspondant à la zone ainsi sélectionnée. Avantageusement :

Dans le premier type de traitement, l'interférence est traitée comme un bruit thermique pour décoder ledit signal d'information de la première communication.

Dans le second type de traitement, les signaux d'information des première et seconde communications font l'objet d'un décodage conjoint.

Dans le troisième type de traitement, on décode d'abord le signal d'information de la seconde communication, on en déduit une estimation du signal d'interférence due à la seconde communication et on le soustrait au signal reçu du premier récepteur, le signal d'information de la première communication étant décodé du signal ainsi obtenu.

Ledit point de fonctionnement peut être obtenu par minimisation de la puissance allouée au premier terminal émetteur pour un débit donné de la première communication.

Alternativement, ledit point de fonctionnement est obtenu par minimisation conjointe des puissances respectivement allouées aux premier et second terminaux émetteur, sous contrainte portant sur une métrique de qualité de service. En particulier, ledit point de fonctionnement est obtenu par minimisation conjointe des puissances respectivement allouées aux premier et second terminaux émetteur pour des débits donnés des première et seconde communications.

Une pluralité de partitions peut être d'abord déterminée, ladite zone étant alors obtenue en sélectionnant celle desdites partitions maximisant au point de fonctionnement une fonction d'utilité dépendant du débit de la première communication.

Alternativement, une pluralité de partitions est déterminée, ladite zone étant alors obtenue en sélectionnant celle desdites partitions maximisant au point de fonctionnement une fonction d'utilité dépendant conjointement des débits respectifs des première et seconde communications. Ladite fonction d'utilité peut être la somme des débits de la première et la seconde communications, ou un débit minimal pour les première et seconde communications.

Dans un mode de réalisation, ledit système de communication comprend une pluralité de couples constitués chacun d'un terminal émetteur en communication avec un terminal récepteur et l'on groupe les couples par paires en sélectionnant pour chaque premier couple de terminaux, un second couple de terminaux de ladite pluralité générant le plus fort niveau d'interférence sur la communication entre les terminaux du premier couple, le premier couple de terminaux et le second couple de terminaux constituant alors une paire.

## BRÈVE DESCRIPTION DES DESSINS

D' autres caractéristiques et avantages de l'invention apparaîtront à la lecture d'un mode de réalisation préférentiel de l'invention, fait en référence aux figures jointes parmi lesquelles :

La Fig. 1 représente schématiquement une situation d'interférence inter-cellulaire intra-bande dans un système de communication cellulaire ;
La Fig. 2 représente schématiquement un modèle du système de communication cellulaire de la Fig. 1 ;
La Fig. 3 représente schématiquement un premier diagramme d'interférence pour une première communication.
La Fig. 4 représente schématiquement un second diagramme d'interférence pour cette même communication ;
La Fig. 5 représente schématiquement un diagramme d'interférence pour une première et une seconde communications ;
La Fig. 6 représente schématiquement un ordinogramme d'une méthode de communication selon un mode de réalisation de l'invention.

## EXPOSÉ DÉTAILLÉ DE MODES DE RÉALISATION PARTICULIERS

Nous considérerons par la suite un système de communication cellulaire comprenant une pluralité de couples de terminaux émetteur et de terminaux récepteur. Comme précédemment nous supposerons que les différentes communications peuvent être affectées par une interférence intra-bande. Le système de communication sans fil peut être, par exemple, un système de communication cellulaire ou un système de communication *ad hoc.*

Dans un but de simplification de la présentation, nous nous placerons tout d'abord dans le cas d'un système ne comportant que deux couples de terminaux, comme illustré en Fig. 1.

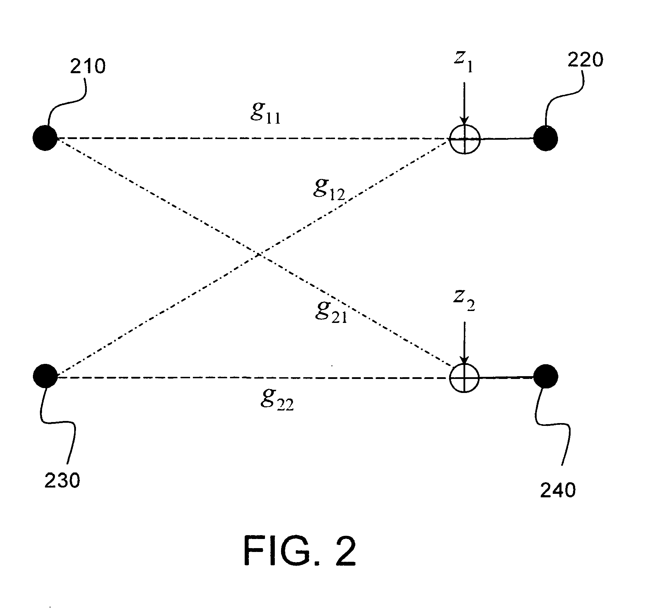

La Fig. 2 représente un modèle du système de télécommunication de la Fig. 1.

Si l'on note $x_1$, $x_2$ les signaux respectivement transmis par les terminaux émetteur 210 et 230 et $y_1$, $y_2$ les signaux respectivement reçus par les terminaux récepteurs 220 et 240, on a :

$$y_1 = g_{11}x_1 + g_{12}x_2 + z_1$$
$$y_2 = g_{21}x_1 + g_{22}x_2 + z_2 \tag{1}$$

où $z_1$, $z_2$ sont des échantillons de bruit blanc gaussien, $g_{11}, g_{21}$ sont les coefficients de canal entre le terminal émetteur 210 et les terminaux récepteurs 220 et 240, respectivement et $g_{22}, g_{12}$ sont les coefficients de canal entre le terminal émetteur 230 et les terminaux récepteurs 240 et 220, respectivement.

On comprendra que l'interférence entre communications est représentée en (1) par les termes croisés.

Pour la première communication, les puissances respectives du signal d'information et de l'interférence due à la seconde communication sont respectivement $|g_{11}|^2 P_1$ et $|g_{12}|^2 P_2$.

On notera que ce modèle est similaire au modèle classique de canal multi-accès à deux utilisateurs dit MAC *(Multiple Access Channel)* tel que décrit par exemple dans l'article de Shih-Chun Chang et al. intitulé « Coding for T-User Multiple-Access Channels, » IEEE Transactions on Information Theory, vol. IT-25, no. 6, pp. 684-691, Nov. 1979.

Il en diffère cependant fondamentalement au sens où dans le modèle MAC, les terminaux récepteurs reçoivent une information utile et non de l'interférence sur les canaux « croisés ».

Le rapport signal à bruit (SNR) au niveau du premier récepteur peut s'exprimer sous la forme :

$$\gamma_1 = \left| g_{11} \right|^2 \frac{P_1}{N_0} \qquad (2)$$

De manière similaire, le rapport interférence à bruit au niveau du premier récepteur n'est autre que :

$$\delta_1 = \left| g_{12} \right|^2 \frac{P_2}{N_0} \qquad (3)$$

De la même façon, les rapports signal à bruit et interférence à bruit au niveau du second récepteur peuvent s'écrire respectivement comme :

$$\gamma_2 = \left| g_{22} \right|^2 \frac{P_2}{N_0} \qquad (4)$$

$$\delta_2 = \left| g_{21} \right|^2 \frac{P_1}{N_0} \qquad (5)$$

On remarquera que les relations suivantes sont vérifiées :

$$\delta_1 = f_2 \gamma_2 \qquad \text{et} \qquad \delta_2 = f_1 \gamma_1 \qquad (6)$$

où

$$f_1 = \frac{\left| g_{21} \right|^2}{\left| g_{11} \right|^2} \quad \text{et} \quad f_2 = \frac{\left| g_{12} \right|^2}{\left| g_{22} \right|^2} . \qquad (6')$$

On notera dans la suite $\rho_1$ et $\rho_2$ les débits respectifs sur la première et la seconde communications et l'on introduit les variables $C_1 = 2^{\rho_1} - 1$, $C_2 = 2^{\rho_2} - 1$ et $C_{12} = 2^{\rho + P} - 1$ .

Pour un couple de débits $(\rho_1, \rho_2)$ donné, on peut distinguer plusieurs régimes d'interférence, chaque régime donnant lieu à un traitement distinct. Plus précisément, si l'on considère la première communication, on peut classer l'interférence en trois régimes possibles :

Schématiquement, dans un premier régime, la puissance de l'interférence due à la seconde communication est plus faible que la puissance du signal d'information reçue au niveau du premier terminal récepteur. Plus précisément, si l'on raisonne en termes de capacité au sens de Shannon, le rapport signal sur bruit plus interférence sur le canal direct entre le terminal émetteur 210 et le terminal récepteur 220 permet de passer le débit $\rho_1$ alors que le rapport signal sur bruit sur le canal « croisé » entre le terminal émetteur 230 et le terminal récepteur 220 ne permet pas de passer le débit $\rho_2$ (le canal « croisé » est en situation de coupure au sens de la théorie de l'information), autrement dit :

$$\rho_1 \le \log_2\left(1 + SINR_{11}\right) = \log_2\left(1 + \frac{\gamma_1}{1 + \delta_1}\right) \qquad (7)$$

et

$$\rho_2 > \log_2\left(1 + INR_{12}\right) = \log_2\left(1 + \delta_1\right) \qquad (8)$$

où $SINR_{11}$ et $INR_{12}$ sont respectivement le rapport signal à bruit plus interférence et le rapport interférence sur bruit au niveau du premier terminal récepteur.

Dans ce régime, le signal d'information de la seconde communication ne peut être décodé du fait de la coupure du canal croisé. Il est alors considéré comme du bruit thermique pour le décodage du signal d'information de la première communication.

On déduit de (7) et (8) les contraintes sur $\delta_1$ et $\gamma_1$ relatives au premier régime :

$$\gamma_1 \ge C_1\left(1 + \delta_1\right) \qquad (9)$$

$$\delta_1 < C_2 \qquad (10)$$

A l'inverse, dans un troisième régime, la puissance de l'interférence est sensiblement supérieure à celle du signal d'information reçu par le premier terminal récepteur. Etant donné que l'interférence est due à la seconde communication, il est proposé de décoder d'abord le signal d'information de la seconde communication, d'estimer l'interférence due à cette communication et de la soustraire du signal reçu. Le signal d'information de la première communication est ensuite décodé du signal résultant, débarrassé de l'interférence.

Dans ce régime, on considère dans une première étape le signal de la première communication comme du bruit thermique et on décode le signal d'information de la seconde communication. On se retrouve par conséquent dans une situation symétrique de celle du premier régime et l'expression (7) est à remplacer par :

$$\rho_2 \le \log_2\left(1 + SINR_{12}\right) = \log_2\left(1 + \frac{\delta_1}{1 + \gamma_1}\right) \qquad (11)$$

où $SINR_{12}$ est le rapport « signal sur bruit » au niveau du terminal récepteur 220 dans lequel on entend le signal comme le signal d'information de la seconde communication.

Dans une seconde étape, une fois la contribution de la seconde communication soustraite du signal reçu, on se retrouve dans le cas d'un signal simplement bruité par un bruit thermique, autrement dit :

$$\rho_1 \le \log_2\left(1 + SNR_{11}\right) = \log_2\left(1 + \gamma_1\right) \qquad (12)$$

où $SNR_{11}$ est le rapport signal sur bruit après élimination de l'interférence due à la seconde communication.

Les expressions (11) et (12) se traduisent par les contraintes suivantes sur $\gamma_1$ et $\delta_1$ :

$$\gamma_1 \le \frac{\delta_1}{C_2} - 1 \qquad (13)$$

et

$$\gamma_1 \geq C_1 \qquad\qquad (14)$$

Enfin, dans un second régime, la puissance de l'interférence est du même ordre que celle du signal d'information. Il est alors proposé de décoder conjointement le signal d'information de la première communication et le signal d'information de la seconde communication au niveau du premier terminal récepteur. Le décodage conjoint des deux signaux d'information pourra, par exemple, être effectué au moyen d'un schéma PIC ou d'une méthode de décodage à maximum de vraisemblance de type MMSE-GDFE (Minimum Mean Square Error - Generalized Decision Feedback Equalizer), de manière connue en soi.

Ce régime d'interférence est intermédiaire entre le premier et le troisième dans la mesure où le débit $\rho_2$ ne vérifie plus (8) et (11), autrement dit :

$$\log_2\left(1 + \frac{\delta_1}{1+\gamma_1}\right) < \rho_2 \leq \log_2(1+\delta_1) \qquad\qquad (15)$$

En revanche, le décodage conjoint suppose que les débits des première et seconde communications puissent être acheminés par le canal composé par le canal direct et le canal croisé, c'est-à-dire :

$$\rho_1 + \rho_2 \leq \log_2(1+\gamma_1+\delta_1) \qquad\qquad (16)$$

On déduit de (15) et (16) les contraintes sur $\gamma_1$ et $\delta_1$ relatives au second régime :

$$C_2 \leq \delta_1 < C_2(1+\gamma_1) \qquad\qquad (17)$$

et

$$\gamma_1 \geq C_{12} - \delta_1 \qquad\qquad (18)$$

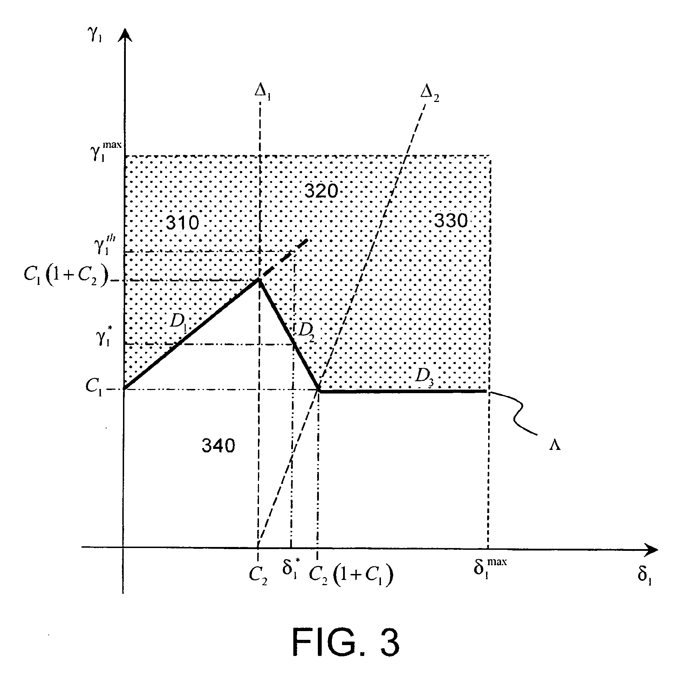

La Fig. 3 montre un diagramme d'interférence dans lequel on a représenté en abscisses le rapport interférence sur bruit $\delta_1$ et en ordonnées le rapport puissance sur bruit $\gamma_1$.

Ce diagramme est obtenu pour des valeurs données de débit $\rho_1$ et $\rho_2$, et par conséquent pour des valeurs données de $C_1, C_2, C_{12}$.

Le rapport $\gamma_1$ varie de 0 à $\gamma^{max} = |g_{11}|^2 P_1^{max} N_0$ et le rapport $\delta_1$, varie de 0 à $\delta_1^{max}, = |g_{12}|^2 P_2^{max} N_0$ où $P_1^{max}$ et $P_2^{max}$ sont respectivement les puissances d'émission maximales des terminaux 210 et 230.

Les droites $\Delta_1$ et $\Delta_2$ définies par les équations $\delta_1 = C_2$ (cf. (10)) et $\gamma_1 = \dfrac{\delta_1}{C_2} - 1$ (cf. (13)) délimitent les trois régimes d'interférence. Les droites $D_1$, $D_2$, $D_3$, respectivement définies par les équations $\gamma_1 = C_1(1+\delta_1)$ (cf. (9)) ; $\gamma_1 = C_{12} - \delta_1$ (cf. (18)) ; $\gamma_1 = C_1$ (cf. (14)) ; donnent la frontière inférieure de puissance, notée A, pour chacun de ces régimes. La zone 310 correspondant au premier régime d'interférence est délimitée par les droites $D_1$ et $\Delta_1$ ainsi que l'axe des ordonnées, celle correspondant au second régime d'interférence, 320, est délimitée par les droites $\Delta_1$, $\Delta_2$ et $D_2$. et enfin celle, 330, correspondant au troisième régime d'interférence est délimitée par $\Delta_2$ et $D_3$.

Au-dessous de la frontière inférieure A se trouve une quatrième zone 340 dans laquelle il n'est pas possible de traiter l'interférence pour la qualité de service demandée, ici pour les débits $\rho_1$ et $\rho_2$. On pourra alors utiliser une autre ressource de transmission, par exemple un autre intervalle de temps de transmission pour éliminer l'interférence entre les deux communications.

Si le débit de la première ou de la seconde communication varie, les paramètres des équations des droites $D_1$, $D_2$, $D_3$ et $\Delta_1$. $\Delta_2$ varient également et, par conséquent, les zones correspondant aux différents régimes d'interférence sont modifiées.

Pour des débits $\rho_1$ et $\rho_2$ donnés, on peut déterminer à partir d'une estimation, au niveau du récepteur, de la puissance du signal d'information, de la puissance de l'interférence et de celle du bruit thermique, dans quel régime d'interférence on se trouve, et effectuer le traitement afférent à cette zone.

En outre, comme indiqué sur la figure, pour des débits $\rho_1$, et $\rho_2$ donnés, on peut déterminer pour chaque puissance d'interférence, $\delta_1$, la plus faible valeur de $\gamma_1$, désignée ici par $\gamma_1^*$, permettant de traiter cette interférence. Autrement dit, pour une puissance d'émission du terminal 230 donnée, on peut allouer au terminal émetteur 210 la puissance minimale $P_1^* = \dfrac{N_0}{|g_{11}|^2}\gamma_1^*$. On remarquera que si l'on se trouve dans la zone 320 ou 330, cette valeur de puissance allouée est bien inférieure à celle, désignée ici par $\gamma_1^{th}$, qu'il aurait été nécessaire d'allouer si l'on avait assimilé l'interférence à du simple bruit thermique.

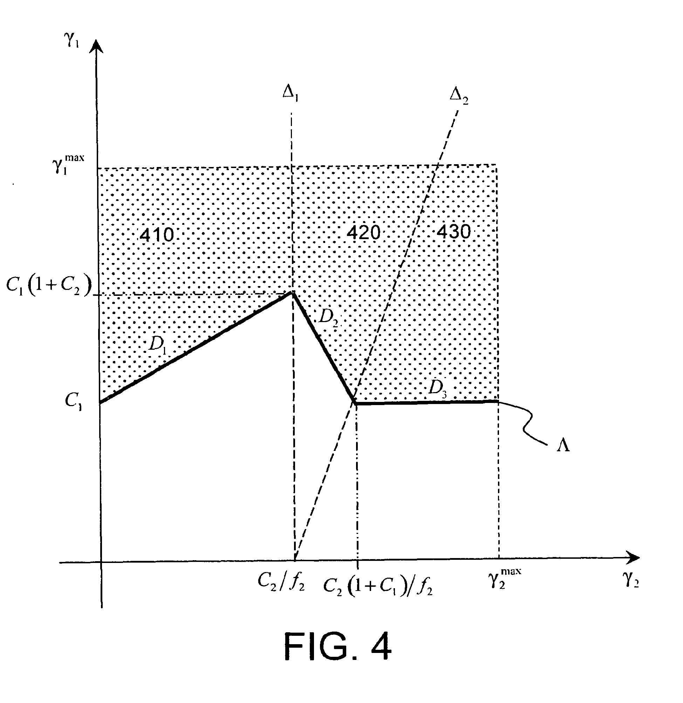

La Fig. 4 montre un diagramme d'interférence dans lequel on a représenté cette fois-ci en abscisses le rapport puissance sur bruit $\gamma_2$ et en ordonnées le rapport puissance sur bruit $\gamma_1$.

Le rapport $\gamma_1$ varie de 0 à $\gamma_1^{max} = |g_{11}|^2 P_1^{max}/N_0$ et le rapport $\gamma_2$ varie de 0 à $\gamma_2^{max} = |g_{22}|^2 P_2^{max}/N_0$.

Les inégalités (9), (13) et (18) peuvent être réécrites en fonction des rapports $\gamma_1$ et $\gamma_2$, à l'aide de (6) :

$$\gamma_1 \geq C_1(1 + f_2\gamma_2) \qquad\qquad (19)$$

$$\gamma_1 \leq \frac{f_2}{C_2}\gamma_2 - 1 \qquad\qquad (20)$$

$$\gamma_1 \geq C_{12} - f_2\gamma_2 \qquad\qquad (21)$$

De manière similaire à la Fig. 3, les droites $\Delta_1$ et $\Delta_2$ définies par les équations $\gamma_2 = C_2/f_2$ (cf. (10)) et

$\gamma_1 = \dfrac{f_2}{C_2}\gamma_2 - 1$ (cf. (20)), délimitent les trois régimes d'interférence et les droites $D_1, D_2, D_3$, respectivement définies

par les équations $\gamma_1 = C_1(1 + f_2\gamma_2)$ (cf. (19)) ; $\gamma_1 = C_{12} - f_2\gamma_2$ (cf. (21)); $\gamma_1 = C_1$ (cf. (14)) ; donnent la frontière inférieure de puissance, $\Lambda$. Les zones correspondant aux différents régimes d'interférence sont désignées par 410, 420 et 430.

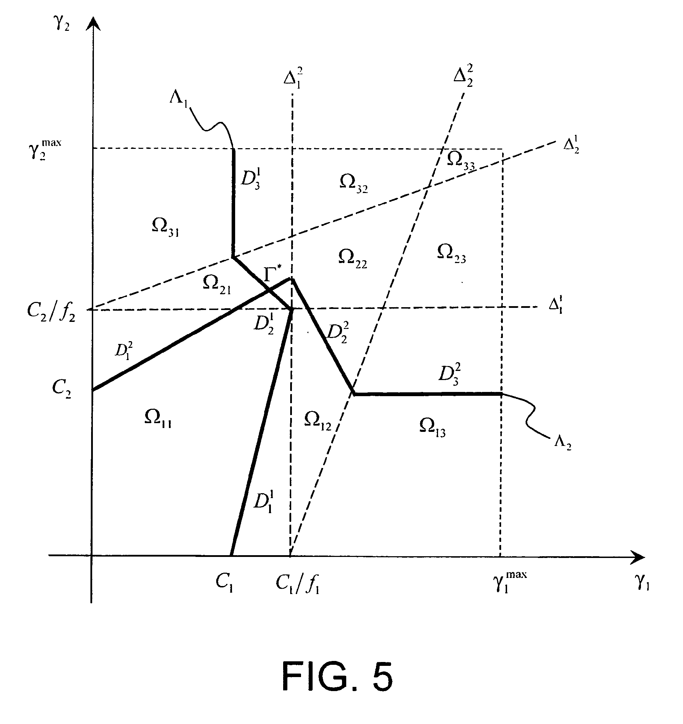

La Fig. 5 représente un diagramme d'interférence identique à celui de la Fig. 4 dans lequel on a indiqué les différents régimes d'interférence pour les deux communications. Le rapport signal à bruit $\gamma_1$ est porté en abscisses et le rapport signal à bruit $\gamma_2$ en ordonnées. On obtient neuf zones distinctes, obtenues par intersection des trois zones relatives à la première communication et des trois zones relatives à la seconde communication. Ces neuf zones sont notées $\Omega_{pq}$, $1 \leq p \leq 3$, $1 \leq q \leq 3$, où $p$ et $q$ indexent respectivement le régime d'interférence de la première et de la seconde communications. Les différentes zones sont délimitées par les droites $\Delta_1^1, \Delta_2^1, \Delta_1^2, \Delta_2^2$, $D_1^1, D_2^1, D_3^1$, et

$D_1^2, D_2^2, D_3^2$ : où l'indice supérieur indique ici la communication.

Les frontières inférieures, $\Lambda_1$ et $\Lambda_2$ relatives aux deux communications, se coupent en un point

$\Gamma^* = \left(\gamma_1^*, \gamma_2^*\right)$. Pour des débits de communication $\rho_1$ et $\rho_2$ donnés, le point $\Gamma^*$ correspond à l'allocation de puissance minimale. De manière générale, la zone $\Omega_{p^*q^*}$ dans laquelle se trouve le point $\Gamma^*$ fournit les régimes d'interférence $p^*$, $q^*$ des deux communications et par conséquent les types de traitement à effectuer au niveau des terminaux récepteur correspondants. On remarquera que dans le cas illustré, c'est la zone $\Omega_{21}$ qui contient le point de fonctionnement, autrement dit pour le décodage du signal d'information de la première communication, on procèdera à un décodage conjoint (au niveau du premier terminal récepteur), et pour le décodage du signal d'information de la seconde communication (au niveau du second terminal récepteur), la première communication sera assimilée à du bruit thermique.

Inversement, pour des puissances d'émission données, on peut déterminer les débits maximaux $\rho_1{}^*$ et $\rho_2$ permettant le traitement de l'interférence. En effet, cela revient à rechercher le couple de frontières inférieures $\Lambda_1^*$ et $\Lambda_2^*$ dont le point $\Gamma = \left( \gamma_1^*, \gamma_2^* \right)$ est l'intersection. La zone où se trouve le point $\Gamma = \left( \gamma_1^*, \gamma_2^* \right)$ donne par ailleurs les types de traitement d'interférence comme précédemment décrit.

De manière plus générale, pour des puissances d'émission données, on pourra rechercher à optimiser une fonction d'intérêt $f(\rho_1,\rho_2)$, dépendant conjointement des débits des première et seconde communications. Par exemple, on pourra chercher à maximiser la somme des débits (*Sum Rate Scheduling*) ou bien garantir un débit minimal (*Min Rate Scheduling*) ou des débits proportionnels à la qualité de liaison (*Fair Rate Scheduling*).

Enfin, on comprendra que d'autres fonctions d'intérêt pourront être optimisées de manière similaire à partir du diagramme d'interférence. La fonction d'intérêt en question pourra notamment dépendre d'autres paramètres de qualité de service tels que le temps de latence sur les communications ou la couverture spatiale des terminaux.

Quelle qu'en soit la forme, la maximisation de la fonction d'intérêt sur le diagramme d'interférence, pour des puissances d'émission données, permet d'obtenir les valeurs optimales des paramètres de qualité de service.

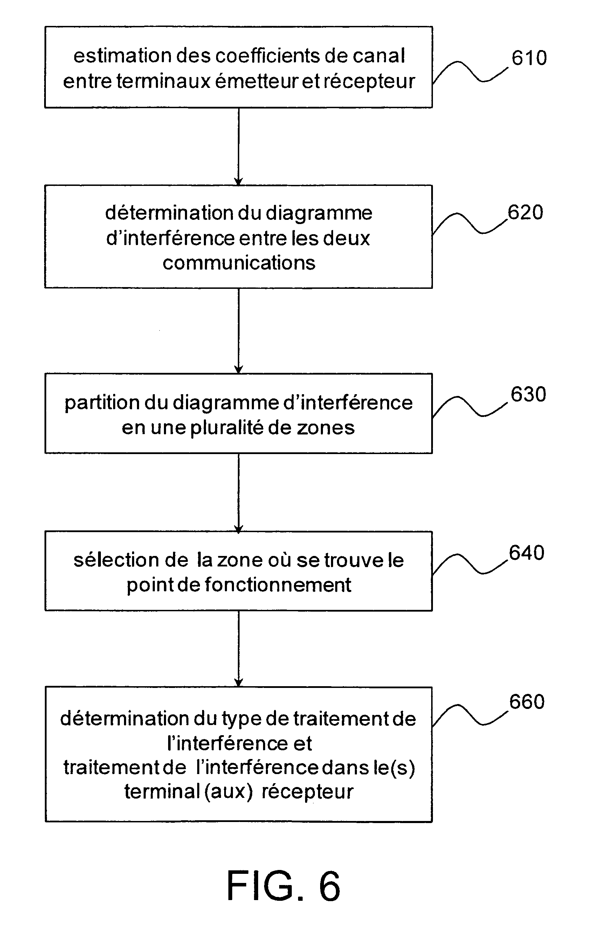

La Fig. 6 représente schématiquement un ordinogramme de la méthode de communication selon un mode de réalisation de l'invention.

Ce mode de réalisation suppose que deux couples de terminaux émetteur et récepteur du système de télécommunication sans fil aient été préalablement sélectionnés parce que leurs communications utilisent les mêmes ressources de transmission et interfèrent entre elles (interférence intra-bande).

A l'étape 610, on estime les coefficients de canal $g_{mn}$, m=1,2 ; n=1,2 ; entre les terminaux émetteur et les terminaux récepteur, par exemple à l'aide de symboles pilote, de manière connue en soi.

A l'étape 620, pour une plage de puissance d'émission $[P_1{}^{min},P_1{}^{max}]$ du premier terminal émetteur, une plage de puissance d'émission $[P_2{}^{min},P_2{}^{max}]$ du second terminal émetteur, et au moins un couple de valeurs de débit des première et seconde communications, on détermine à partir des coefficients précédemment estimés, $\hat{g}_{mn}$, un diagramme d'interférence $(\delta_1,\gamma_1)$ ou $(\gamma_2,\gamma_1)$ pour au moins la première communication voire pour les deux communications.

A l'étape 630, on détermine, pour au moins la première communication, une partition du diagramme d'interférence en une pluralité de zones distinctes. A chacune de ces zones est associé un traitement de l'interférence.

Avantageusement, on utilisera la partition en trois zones, telle que décrite précédemment.

Dans la première zone, l'interférence due à la seconde communication est de faible puissance par rapport au signal d'information de la première communication. L'interférence est alors traitée comme du bruit thermique pour le décodage de ce signal d'information.

Dans la seconde zone, l'interférence due à la seconde communication est du même ordre de puissance que le signal d'information de la première communication. On procède alors à un décodage conjoint des signaux d'informations des deux communications.

Enfin dans un troisième régime, l'interférence due à la seconde communication a une puissance sensiblement supérieure à celle du signal d'information de la première communication. On décode alors d'abord le signal d'information de la seconde communication du signal reçu, on estime ladite interférence à partir du signal ainsi décodé (et du coefficient de canal $g_{12}$). L'interférence estimée est soustraite du signal reçu pour générer un signal débarrassé de l'interférence. Enfin le signal d'information de la première communication est décodé à partir de ce dernier signal.

Comme indiqué plus haut on peut procéder à une partition du diagramme d'interférence à la fois pour la première et la seconde communications. De manière générale on obtiendra alors une partition en $P^2$ zones $\Omega_{ij}$ distinctes où $P$ est le nombre de régimes d'interférence pour une seule communication.

En pratique les différentes zones sont délimitées par les droites $\Delta_q^k$ et $D_s^k$, q=1,2, s=1,2,3 où k=1,2 est l'indice de la communication.

A l'étape 640, on sélectionne la zone où se trouve le point de fonctionnement du premier terminal récepteur, donné par exemple par le rapport signal sur bruit et interférence sur bruit au niveau de ce terminal.

Ce point de fonctionnement peut être obtenu de différentes façons.

Tout d'abord, il peut être déterminé par le terminal récepteur à partir d'une estimation des puissances respectives du signal d'information, de l'interférence et du bruit thermique. Ces puissances peuvent être par exemple obtenues en prévoyant des périodes de silence dans les première et seconde communications, le bruit thermique étant mesuré pendant une période de silence pour les deux communications. Le bruit thermique peut aussi être mesuré à l'aide de séquences de symboles pilote.

Alternativement, le point de fonctionnement peut être fourni directement par une consigne de puissance pour les terminaux émetteur. Les puissances du signal d'information et d'interférence, au niveau du terminal récepteur, sont alors calculées à partir des coefficients de canal.

Le point de fonctionnement peut encore être déterminé par une méthode d'allocation de puissance minimale. Dans ce cas, les puissances allouées sont obtenues par l'intersection des courbes $\Lambda_1$ et $\Lambda_2$, comme vu plus haut.

Réciproquement, pour un point de fonctionnement $\Gamma$ donné, on peut rechercher les débits $\rho_1^*, \rho_2^*$ maximisant une fonction d'utilité $f(\rho_1,\rho_2)$ au point de fonctionnement. Les débits $\rho_1^*, \rho_2^*$ déterminent alors une partition du diagramme d'interférence puisque les équations des droites $\Delta_q^k$ et $D_s^k$ dépendent de ceux-ci.

A l'étape 650, on déduit de la zone ainsi sélectionnée le type de traitement de l'interférence $(i^*,j^*)$ à effectuer au niveau du premier et/ou du second récepteur(s) et on effectue le traitement dans le récepteur selon le type sélectionné.

La méthode de communication selon l'invention se généralise à un nombre quelconque $K$ de couples de terminaux et donc à un nombre $K$ de communications correspondantes. Le diagramme d'interférence de la Fig. 4 ou 5 est alors construit dans un espace à $K \geq 2$ dimensions et l'on a $P^K$ combinaisons possibles de $P$ régimes d'interférence pour l'ensemble des $K$ communications du système.

Ce nombre pouvant être très élevé, on peut opter pour une solution sous-optimale mais plus simple à mettre en oeuvre.

Selon cette solution, on sélectionne un à un les couples de terminaux émetteur et récepteur, $T_k = (E_k, R_k)$, $k=1,...,K$ où $E_k$ est un terminal émetteur en communication avec un terminal récepteur $R_k$. Pour un couple $T_k$, on recherche le couple $T_{k'}$ dont la communication $k'$ induit le plus fort niveau d'interférence sur la communication $k$. On groupe alors $T_k$ et $T_{k'}$ sous la forme d'une paire. Le procédé se poursuit avec les terminaux restants jusqu'à ce que tous les couples $T_k$ soient appariés, à l'exception d'un seul si $K$ est impair.

Avantageusement pour un couple $T_k$ donné, la recherche du couple $T_{k'}$ induisant le fort niveau d'interférence peut être effectué en comparant les rapports de coefficients de canal $\tilde{f}_k^{k'} = \dfrac{|g_{kk'}|}{|g_{kk}|}$ où $g_{kk'}$ est le coefficient du canal « croisé » entre $E_{k'}$ et $R_k$ et $g_{kk}$ est le coefficient du canal direct entre $E_k$ et $R_k$. Le couple $T_{k'}$ sélectionné est celui correspondant au rapport $f_k^{k'}$ le plus élevé.

Pour une paire $(T_k, T_{k'})$ ainsi constituée, on pourra considérer que les autres paires ne sont que faiblement interférentes. L'interférence « résiduelle » due aux autres communications sera traitée comme du bruit thermique et par conséquent n'influera pas sur le choix du type de traitement de l'interférence pour la communication $k$.

Une fois le diagramme d'interférence déterminé pour la paire $(T_k, T_{k'})$ et les zones des différents régimes d'interférence identifiées, une allocation de puissance minimale peut être effectuée en respectant une contrainte sur les débits $\rho_k$ et $\rho_{k'}$ (et de manière générale sur une métrique de qualité se service). Il est alors possible que les puissances allouées aux différents terminaux d'émission modifient le schéma d'interférence. Dans ce cas, il est possible d'itérer le processus de groupement des couples par paire, de détermination des zones d'interférence et d'allocation de puissance minimale, ce jusqu'à ce que l'on converge ou qu'un nombre maximal d'itérations soit atteint. La convergence peut être vérifiée par exemple en comparant par rapport à un seuil la somme des écarts entre puissances successives calculée sur l'ensemble des terminaux émetteurs. Le critère de convergence peut être apprécié pour l'ensemble des paires ou bien de manière indépendante paire par paire.

Dans tous les cas, après que les paires $(T_k, T_{k'})$ ont été constituées, les diagrammes de puissance sont calculés pour chacune de ces paires et les zones d'interférence sont identifiées dans chacun de ces diagrammes. Cette opération peut être effectuée de manière centralisée par un noeud dédié ou bien distribuée dans les terminaux récepteurs.

Dans tous les cas, l'homme du métier comprendra que le calcul peut être réalisé à l'aide d'un microprocesseur, d'un processeur arithmétique spécialisé (DSP) ou encore par lecture dans une ROM dans laquelle ont été préalablement stockés des résultats de calcul (look-up table).

## Revendications

1. Méthode de communication pour système de télécommunication cellulaire comprenant au moins un premier couple de terminaux constitué d'un premier terminal émetteur et d'un premier terminal récepteur et d'un second couple de terminaux constitué d'un second terminal émetteur et d'un second terminal récepteur, une première communication entre les terminaux du premier couple utilisant les mêmes ressources de transmission qu'une seconde communication entre les terminaux du second couple, de sorte que les deux communications interfèrent entre elles, **caractérisée en ce que** :

- on estime (610) les coefficients de canal entre lesdits terminaux émetteur et lesdits terminaux récepteur ;
- on en déduit (620) un diagramme d'interférence pour au moins le premier terminal récepteur, le diagramme étant obtenu pour une première plage de puissance d'émission du premier terminal émetteur et une seconde plage de puissance d'émission du second terminal, et pour au moins un couple de débits des première et seconde communications ;
- on détermine (630), pour le couple de débits considéré, une partition du diagramme en différentes zones, chaque zone correspondant à un type distinct de traitement de l'interférence pour au moins la première communication ;
- on sélectionne (640) une zone de la partition contenant un point de fonctionnement des premier et second terminaux récepteur ;
- on effectue (650) au moins dans le premier terminal récepteur le traitement de l'interférence correspondant à la zone ainsi sélectionnée.

2. Méthode de communication selon la revendication 1, **caractérisée en ce que** dans le premier type de traitement l'interférence est traitée comme un bruit thermique pour décoder ledit signal d'information de la première communication.

3. Méthode de communication selon la revendication 1, **caractérisée en ce que** dans le second type de traitement, les signaux d'information des première et seconde communications font l'objet d'un décodage conjoint.

4. Méthode de communication selon la revendication 1, **caractérisée en ce que** dans le troisième type de traitement, on décode d'abord le signal d'information de la seconde communication, on en déduit une estimation du signal d'interférence due à la seconde communication et on le soustrait au signal reçu du premier récepteur, le signal d'information de la première communication étant décodé du signal ainsi obtenu.

5. Méthode de communication selon l'une des revendications précédentes, **caractérisée en ce que** ledit point de fonctionnement est obtenu par minimisation de la puissance allouée au premier terminal émetteur pour un débit donné de la première communication.

6. Méthode de communication selon l'une des revendications 1 à 4, **caractérisée en ce que** ledit point de fonctionnement est obtenu par minimisation conjointe des puissances respectivement allouées aux premier et second terminaux émetteur, sous contrainte portant sur une métrique de qualité de service.

7. Méthode de communication selon la revendication 6, **caractérisée en ce que** ledit point de fonctionnement est obtenu par minimisation conjointe des puissances respectivement allouées aux premier et second terminaux émetteur pour des débits donnés des première et seconde communications.

8. Méthode de communication selon l'une des revendications 1 à 4, **caractérisée en ce qu'**une pluralité de partitions est déterminée et que ladite zone est obtenue en sélectionnant celle desdites partitions maximisant au point de fonctionnement une fonction d'utilité dépendant du débit de la première communication.

9. Méthode de communication selon l'une des revendications 1 à 4, **caractérisée en ce qu'**une pluralité de partitions est déterminée et que ladite zone est obtenue en sélectionnant celle desdites partitions maximisant au point de fonctionnement une fonction d'utilité dépendant conjointement des débits respectifs des première et seconde communications.

10. Méthode de communication selon la revendication 9, **caractérisée en ce que** ladite fonction d'utilité est la somme des débits de la première et la seconde communications.

11. Méthode de communication selon la revendication 9, **caractérisée en ce que** ladite fonction d'utilité est un débit minimal pour les première et seconde communications.

12. Méthode de communication selon l'une des revendications précédentes, **caractérisée en ce que** ledit système de communication comprend une pluralité de couples constitués chacun d'un terminal émetteur en communication avec un terminal récepteur et que l'on groupe les couples par paires en sélectionnant pour chaque premier couple de terminaux, un second couple de terminaux de ladite pluralité générant le plus fort niveau d'interférence sur la communication entre les terminaux du premier couple, le premier couple de terminaux et le second couple de terminaux constituant alors une paire.

**Claims**

1.  A communication method for a cellular telecommunications system comprising at least one first couple of terminals formed by a first transmitting terminal and a first receiving terminal and a second couple of terminals formed by a second transmitting terminal and a second receiving terminal, a first communication between the terminals of the first couple using the same radio resources as a second communication between the terminals of the second couple, such that the two communications interfere with each other, **characterized in that**:

    - the channel coefficients are estimated (610) between said transmitting terminals and said receiving terminals;
    - an interference diagram is deduced (620) for at least the first receiving terminal, the diagram being obtained for a first transmission power range of the first transmitting terminal and a second transmission power range of the second terminal, and for at least one couple of rates for the first and second communications;
    - for the considered couple of rates, a partition of the diagram into different zones is determined (630), each zone corresponding to a distinct type of processing of the interference for at least the first communication;
    - a zone of the partition is selected (640) containing an operating point of the first and second receiving terminals;
    - at least in the first receiving terminal, the processing is done (650) for the interference corresponding to the zone thus selected.

2.  The communication method according to claim 1, **characterized in that** in the first type of processing, the interference is processed as thermal noise to decode said information signal of the first communication.

3.  The communication method according to claim 1, **characterized in that** in the second type of processing, the information signals of the first and second communications are the subject of joint decoding.

4.  The communication method according to claim 1, **characterized in that** in the third type of processing, the information signal of the second signal is first decoded, an estimate of the interference signal due to the second communication is deduced therefrom and it is subtracted from the signal received by the first receiver, the information signal of the first communication being decoded from the signal thus obtained.

5.  The communication method according to one of the preceding claims, **characterized in that** said operating point is obtained by minimizing the power allocated to the first transmitting terminal for a given rate of the first communication.

6.  The communication method according to one of claims 1 to 4, **characterized in that** said operating point is obtained by joint minimization of the powers respectively allocated to the first and second transmitting terminals, under a constraint on a first service quality metric.

7.  The communication method according to claim 6, **characterized in that** said operating point is obtained by joint minimization of the powers respectively allocated to the first and second transmitting terminals for given rates of the first and second communications.

8.  The communication method according to one of claims 1 to 4, **characterized in that** a plurality of partitions is determined and that zone is obtained by selecting the one of said partitions maximizing, at the operating point, a utility function depending on the rate of the first communication.

9.  The communication method according to one of claims 1 to 4, **characterized in that** a plurality of partitions is determined and that zone is obtained by selecting the one of said partitions maximizing, at the operating point, a utility function jointly depending on the respective rates of the first and second communications.

10. The communication method according to claim 9, **characterized in that** said utility function is the sum of the rates of the first and second communications.

11. The communication method according to claim 9, **characterized in that** said utility function is a minimum rate for

EP 2 413 511 B1

the first and second communications.

12. The communication method according to one of the preceding claims, **characterized in that** said communication system comprises a plurality of couples each formed by a transmitting terminal in communication with a receiving terminal and **in that** the couples are grouped together in pairs by selecting, for each first couple of terminals, a second couple of terminals of said plurality generating the strongest interference level on the communication between the terminals of the first couple, the first couple of terminals and the second couple of terminals then constituting a pair.

**Patentansprüche**

1. Kommunikationsverfahren für ein zelluläres Telekommunikationssystem, umfassend wenigstens ein erstes Paar von Terminals, das gebildet wird durch ein erstes Sendeterminal und ein erstes Empfangsterminal, sowie ein zweites Paar von Terminals, das gebildet wird durch ein zweites Sendeterminal und ein zweites Empfangsterminal, wobei eine erste Kommunikation zwischen den Terminals des ersten Paares die gleichen Übertragungsressourcen verwendet wie eine zweite Kommunikation zwischen den Terminals des zweiten Paares, derart, dass die zwei Kommunikationen miteinander interferieren, **dadurch gekennzeichnet, dass**:

   - man die Kanalkoeffizienten zwischen den Sendeterminals und den Empfangsterminals abschätzt (610);
   - man hieraus ein Interferenzdiagramm für wenigstens das erste Empfangsterminal ableitet (620), wobei das Diagramm erhalten wird für einen ersten Sendeleistungsbereich des ersten Sendeterminals und einen zweiten Sendeleistungsbereich des zweiten Terminals, sowie für wenigstens ein Paar von Datenflüssen der ersten und der zweiten Kommunikation;
   - man für das betrachtete Paar von Datenflüssen eine Unterteilung des Diagramms in verschiedene Zonen bestimmt (630), wobei jede Zone einem verschiedenen Typ von Verarbeitung der Interferenz wenigstens für die erste Kommunikation entspricht;
   - man eine Zone der Unterteilung auswählt (640), die einen Betriebspunkt des ersten und des zweiten Empfangsterminals enthält;
   - man wenigstens im ersten Empfangsterminal die Verarbeitung der Interferenz durchführt (650), die der derart ausgewählten Zone entspricht.

2. Kommunikationsverfahren nach Anspruch 1, **dadurch gekennzeichnet, dass** beim ersten Typ der Verarbeitung die Interferenz wie ein thermisches Rauschen behandelt wird, um das Informationssignal der ersten Kommunikation zu decodieren.

3. Kommunikationsverfahren nach Anspruch 1, **dadurch gekennzeichnet, dass** beim zweiten Typ der Verarbeitung die Informationssignale der ersten und der zweiten Kommunikation Gegenstand einer gemeinsamen Decodierung sind.

4. Kommunikationsverfahren nach Anspruch 1, **dadurch gekennzeichnet, dass** beim dritten Typ von Verarbeitung man zunächst das Informationssignal der zweiten Kommunikation decodiert, man hieraus eine Abschätzung des Signals der Interferenz auf Grund der zweiten Kommunikation herleitet, und man es vom Signal subtrahiert, das vom ersten Empfänger empfangen wird, wobei das Informationssignal der ersten Kommunikation vom derart erhaltenen Signal decodiert wird.

5. Kommunikationsverfahren nach einem der vorhergehenden Ansprüche, **dadurch gekennzeichnet, dass** der Betriebspunkt erhalten wird durch Minimierung der dem ersten Sendeterminal zugewiesenen Leistung für einen gegebenen Datenfluss der ersten Kommunikation.

6. Kommunikationsverfahren nach einem der Ansprüche 1 - 4, **dadurch gekennzeichnet, dass** der Betriebspunkt erhalten wird durch gemeinsame Minimierung der dem ersten bzw. dem zweiten Sendeterminal zugewiesenen Leistungen unter einer Bedingung, die sich auf eine Dienstqualitätsmetrik bezieht.

7. Kommunikationsverfahren nach Anspruch 6, **dadurch gekennzeichnet, dass** der Betriebspunkt erhalten wird durch gemeinsame Minimierung der dem ersten bzw. dem zweiten Sendeterminal zugewiesenen Leistungen für gegebene Datenflüsse der ersten und der zweiten Kommunikation.

8. Kommunikationsverfahren nach einem der Ansprüche 1 - 4, **dadurch gekennzeichnet, dass** eine Mehrzahl von

13

Unterteilungen bestimmt wird, und dass die Zone erhalten wird durch Auswählen derjenigen der Unterteilungen, die am Betriebspunkt eine Nützlichkeitsfunktion maximiert, welche vom Datenfluss der ersten Kommunikation abhängt.

9. Kommunikationsverfahren nach einem der Ansprüche 1 - 4, **dadurch gekennzeichnet, dass** eine Mehrzahl von Unterteilungen bestimmt wird, und dass die Zone erhalten wird durch Auswählen derjenigen der Unterteilungen, die am Betriebspunkt eine Nützlichkeitsfunktion maximiert, welche gemeinsam von den jeweiligen Datenflüssen der ersten und der zweiten Kommunikation abhängt.

10. Kommunikationsverfahren nach Anspruch 9, **dadurch gekennzeichnet, dass** die Nützlichkeitsfunktion die Summe der Datenflüsse der ersten und der zweiten Kommunikation ist.

11. Kommunikationsverfahren nach Anspruch 9, **dadurch gekennzeichnet, dass** die Nützlichkeitsfunktion ein minimaler Datenfluss für die erste und die zweite Kommunikation ist.

12. Kommunikationsverfahren nach einem der vorhergehenden Ansprüche, **dadurch gekennzeichnet, dass** das Kommunikationssystem eine Mehrzahl von Paaren umfasst, die jeweils gebildet sind durch ein Sendeterminal in Verbindung mit einem Empfangsterminal, und dass man die Paare paarweise gruppiert, indem man für jedes erste Paar von Terminals ein zweites Paar von Terminals der Mehrzahl auswählt, welches den stärksten Interferenzpegel bei der Kommunikation zwischen den Terminals des ersten Paares generiert, wobei das erste Paar von Terminals und das zweite Paar von Terminals somit ein Paar bilden.

151

110

140

130

120

152

FIG. 1

FIG. 2

FIG. 3

FIG. 4

FIG. 5

estimation des coefficients de canal entre terminaux émetteur et récepteur ⟩⌇610

détermination du diagramme d'interférence entre les deux communications ⌇620

partition du diagramme d'interférence en une pluralité de zones ⌇630

sélection de la zone où se trouve le point de fonctionnement ⌇640

détermination du type de traitement de l'interférence et traitement de l'interférence dans le(s) terminal(aux) récepteur ⌇660

# FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **R.H. ETKIN et al.** Gaussian interference channel capacity to within one bit: the general case. *Proc. ISIT,* 2007, 2181-2185
- **S.A. JAFAR.** Generalized degrees of freedom of the symmetric gaussian K user interference channel. *IEEE Trans. on Inf. Theory,* Juillet 2010, vol. 56 (7), 3297-3303

- **SHIH-CHUN CHANG et al.** Coding for T-User Multiple-Access Channels. *IEEE Transactions on Information Theory,* Novembre 1979, vol. IT-25 (6), 684-691